# DEMANDE DE BREVET EUROPEEN

(11) **EP 2 940 436 A1**
(43) Date de publication de la demande: **04.11.2015**
(21) Numéro de dépôt: 15165131.2
(22) Date de dépôt: 24.04.2015
(51) Int. Cl.: G01F 11/02, B65B 3/32, G01F 13/00, G01F 15/12, F04B 15/02, F04B 53/22

(54) **MACHINE DOSEUSE À DÉMONTAGE AUTOMATISÉ**

(30) Priorité: 30.04.2014 FR 1453992
(71) Demandeur: Tremark Technologies Inc., Montreal, Quebec H2Z 2B7 (CA)
(72) Inventeur: Marchadour, Jean-Charles, 29120 PONT L'ABBE (FR)
(74) Mandataire: Lavialle, Bruno François Stéphane

(57) **Abrégé**

Machine de dosage comportant un bâti (1) sur lequel sont montés une trémie (2), au moins un conduit (12) débouchant dans la trémie à proximité d'un fond de celle-ci et recevant une partie d'une vis de transfert (10) s'étendant au fond de la trémie, au moins un cylindre de dosage (22) qui reçoit à coulissement un piston d'aspiration et de refoulement (32) et qui est raccordé au conduit par une vanne à tournant (21) en contact avec une extrémité du conduit opposée à la trémie, et des moyens motorisés d'entraînement de la vis de transfert, du piston et du tournant qui sont agencés pour réaliser le dosage. La machine comportant des moyens motorisés de dégagement du piston hors du cylindre de dosage et du tournant hors du corps de vanne.

## Description

La présente invention concerne le dosage de produits tels que des produits alimentaires.

Une machine doseuse comprend généralement un bâti sur lequel sont fixés :
- une trémie d'alimentation,
- une unité de dosage pourvue d'un cylindre de dosage qui est raccordé à une sortie de la trémie et qui reçoit à coulissement un piston,
- une unité de motorisation ayant un organe de transmission de mouvement relié au piston,
- une conduite de distribution du produit reliée au cylindre de dosage.

L'unité de motorisation comprend la plupart du temps un moteur rotatif ayant un arbre de sortie entraînant un maneton auquel est articulé une première extrémité d'une bielle ayant une deuxième extrémité articulée au piston pour former l'organe de transmission de mouvement.

Lorsque la machine doit être nettoyée, par exemple en raison d'un changement du produit à doser, il faut démonter manuellement la conduite de distribution et l'unité de dosage afin de pouvoir introduire à l'intérieur de ceux-ci un produit de nettoyage. Ce démontage, et le remontage qui suit, doivent être opérés par des ouvriers qualifiés car de leur réalisation correcte dépend le bon fonctionnement de la machine.

Pour simplifier les opérations de démontage et remontage, il est connu, notamment du document FR-A-2843798, de monter l'unité de dosage sur un élément support articulé sur le bâti. Cet agencement facilite, lors du remontage, le positionnement relatif des pièces à remonter. Les opérations de démontage et remontage restent cependant des opérations essentiellement manuelles réalisées par du personnel formé à cet effet.

Un but de l'invention est de fournir un moyen pour faciliter le nettoyage de telles machines.

A cet effet, on prévoit, selon l'invention, une machine de dosage comportant un bâti sur lequel sont montés une trémie, au moins un conduit débouchant dans la trémie à proximité d'un fond de celle-ci et recevant une partie d'une vis de transfert s'étendant au fond de la trémie, au moins un cylindre de dosage qui reçoit à coulissement un piston d'aspiration et de refoulement et qui est raccordé au conduit par une vanne à tournant en contact avec une extrémité du conduit opposée à la trémie, et des moyens motorisés d'entraînement de la vis de transfert, du piston et du tournant qui sont agencés pour réaliser le dosage. Le piston est monté sur le bâti pour coulisser entre une position de refoulement dans laquelle le piston est dans le cylindre de dosage au voisinage de la vanne et une position de nettoyage dans laquelle le piston est dégagé du cylindre de dosage. Le tournant est monté sur le bâti pour coulisser entre une position active dans laquelle le tournant est reçu dans un corps de la vanne et une position de nettoyage dans laquelle le tournant est dégagé du corps de vanne. La machine comprend des moyens motorisés de dégagement du piston hors du cylindre de dosage et du tournant hors du corps de vanne.

Ainsi, le démontage et le remontage de l'unité de dosage (ensemble cylindre piston) et de la vanne à tournant sont automatisés. Ces opérations sont donc simples et peuvent être réalisées par du personnel non qualifié. L'automatisation permet en outre de rendre ces opérations rapides et fiables.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique partielle, de profil et en coupe, d'une machine doseuse selon l'invention, en mode de dosage,
- la figure 2 est une vue schématique partielle, de profil et en coupe, de l'unité de dosage de cette machine doseuse en mode de dosage,
- la figure 3 est une vue schématique partielle, de face et en coupe, de l'unité de dosage de cette machine doseuse en mode de dosage,
- la figure 4 est une vue schématique partielle, de profil et en coupe, de l'unité de dosage de la machine doseuse en mode de nettoyage,
- la figure 5 est une vue schématique partielle, de face et en coupe, de l'unité de dosage de cette machine doseuse en mode de nettoyage,
- la figure 6 est une vue schématique partielle en perspective de cette machine doseuse en mode de nettoyage.

En référence aux figures, la machine doseuse conforme à l'invention comprend un bâti 1 sur lequel est montée une trémie généralement désignée en 2, d'axe vertical et destinée à recevoir en vrac les produits à doser puis à mettre en boîte.

Le bâti 1 est formé d'éléments d'ossature assemblés les uns aux autres. Ces éléments d'ossature comprennent ici des tubes cylindriques à section externe circulaire. Cet agencement sous forme de tubes permet le passage de câbles dans les éléments d'ossature et la forme extérieure cylindrique à contour circulaire favorise l'écoulement des liquides et donc les opérations de nettoyage externe de la machine.

La trémie 2 comporte une cuve 3 délimitée par une paroi latérale dont une extrémité est obturée par un fond 4 horizontal et une extrémité opposée comporte une collerette 5 formant un appui pour un entonnoir 6 relié au bâti 1 par une articulation 7 pour basculer autour d'un axe horizontal perpendiculaire à l'axe de la trémie 2 entre une position en appui contre la collerette d'appui 5 de la cuve 3 et une position dégagée vers l'arrière par rapport à la cuve 3.

Un racleur 8 est monté à l'intérieur de la trémie 2 le long d'une génératrice de l'entonnoir 6. Le racleur 8 possède une extrémité inférieure solidaire d'une couronne dentée 9 montée pour pivoter sur la collerette 5 de la cuve 3 sous l'action d'un pignon, non visible sur les figures, qui est relié à un arbre de sortie d'un moteur et qui engrène avec la couronne dentée 9 pour déplacer le racleur 8 selon un mouvement de balayage de la face interne de l'entonnoir 6. Un organe de mélange peut être associé ou substitué au racleur 8 pour brasser les produits dans l'entonnoir 6.

Deux vis de transfert 10 s'étendent horizontalement au fond de la cuve 3. Chaque vis de transfert 10 possède, par référence à un sens de transfert des produits, une extrémité aval passant par une ouverture 11 pratiquée dans la paroi latérale de la cuve 3 pour s'étendre en saillie de la cuve 3 dans un conduit 12 horizontal qui débouche à proximité du fond 4 de la cuve 3 et une extrémité amont solidaire d'une extrémité d'un arbre 13 qui traverse la paroi latérale de la cuve 3 et qui est reçu dans un palier 14 monté à l'extérieur de la cuve 3. Les arbres 13 ont des extrémités opposées aux vis de transfert 10 qui sont équipées de pignons 15 engrenant l'un avec l'autre. L'un des arbres 13 est en outre pourvu sur cette extrémité d'une poulie menée 16 reliée par l'intermédiaire d'une courroie 17 à une poulie menante 18 reliée à un arbre de sortie d'un servomoteur 19.

Chaque conduit 12 a une surface interne enveloppant l'extrémité aval de la vis de transfert 10 correspondante. Des rainures axiales 20 sont toutefois ménagées dans cette surface interne afin de constituer un obstacle à la rotation des produits autour de l'axe de la vis de transfert 10 de manière à favoriser un déplacement axial de ces produits.

Chaque conduit 12 possède une extrémité libre qui est en contact par l'intermédiaire de moyens d'étanchéité avec un corps d'une vanne à tournant 21 qui est également en contact par l'intermédiaire de moyens d'étanchéité avec une extrémité supérieure d'un cylindre de dosage 22 d'axe vertical (les éléments d'étanchéité sont par exemple ici constitués de joints annulaires partiellement emboîtables ayant des formes tronconiques complémentaires).

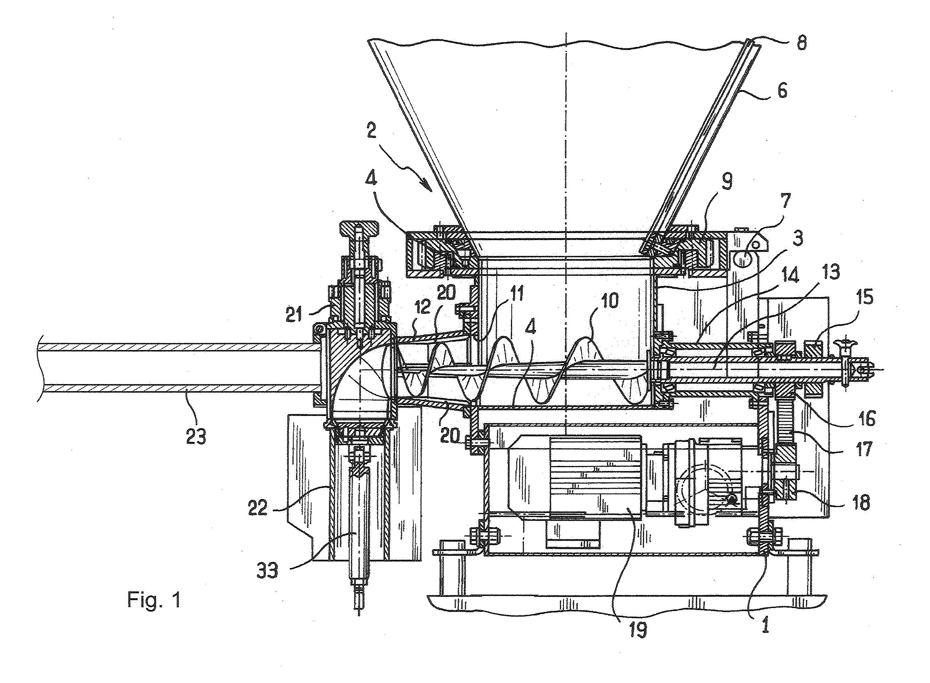

Le tournant de la vanne à tournant 21 délimite un canal coudé selon un angle de 90°. Le tournant de chaque vanne à tournant 21 est mobile entre une position d'alimentation du cylindre de dosage 22 (représentée notamment à la figure 1) dans laquelle le canal coudé relie le conduit 12 au cylindre de dosage 22 et une position d'évacuation du cylindre de dosage 22 dans laquelle le canal coudé relie le cylindre de dosage à un conduit 23 de distribution de doses en regard de l'extrémité duquel s'étend un support non représenté d'une boîte à remplir. Les conduits 23 sont raccordés aux corps de vanne par des colliers amovibles autorisant des démontages et remontages rapides. Les tournants sont entraînés entre la position d'alimentation des cylindres de dosage 22 et la position d'évacuation des cylindres de dosage 22 par l'intermédiaire d'une motorisation symbolisée en 24.

Les vannes à tournant 21 ont un corps solidaire d'un support commun 25. Le châssis 26 est fixé au bâti 1 et comporte deux armatures verticales 26.1 ayant des extrémités supérieures réunies l'une à l'autre par une première entretoise horizontale 26.2 et des extrémités inférieures réunies l'une à l'autre par une deuxième entretoise horizontale 26.2. De préférence, le châssis 26 peut être monté pour pivoter, à la manière d'une porte, sur un mât vertical 41 solidaire du bâti 1 entre une position active (représentée à la figure 1) dans laquelle les corps des vannes à tournant 21 est en appui contre les conduits 12 et une position inactive dans laquelle les corps des vannes à tournant sont écartés des conduits 12 pour libérer l'accès à ceux-ci. En variante, le châssis 26 est déplaçable horizontalement le long du bâti 1 : le châssis 26 est par exemple solidaire d'un chariot, éventuellement motorisé, monté pour coulisser le long du bâti 1 entre la position active et la position inactive.

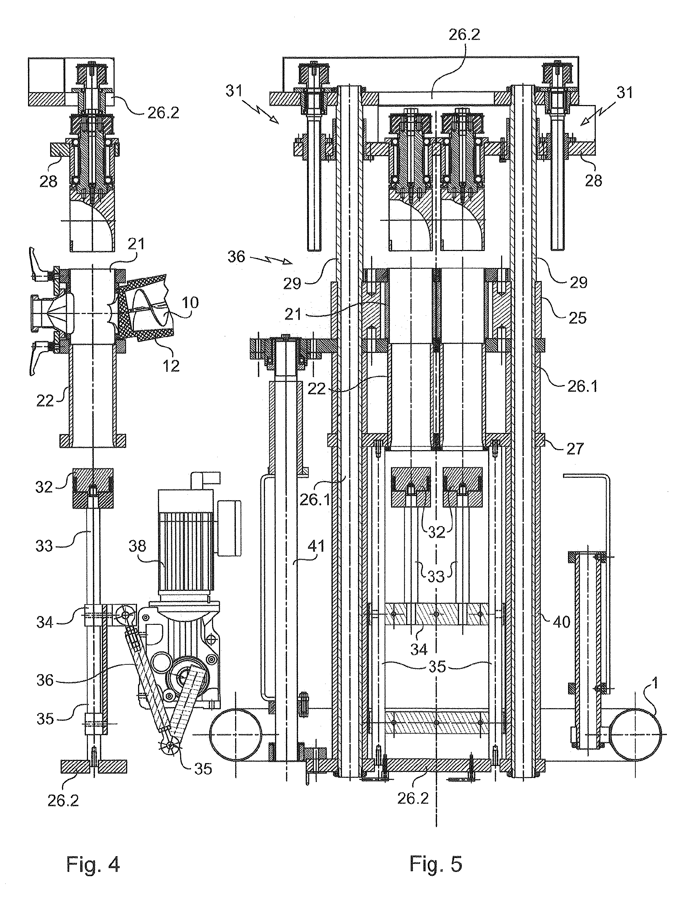

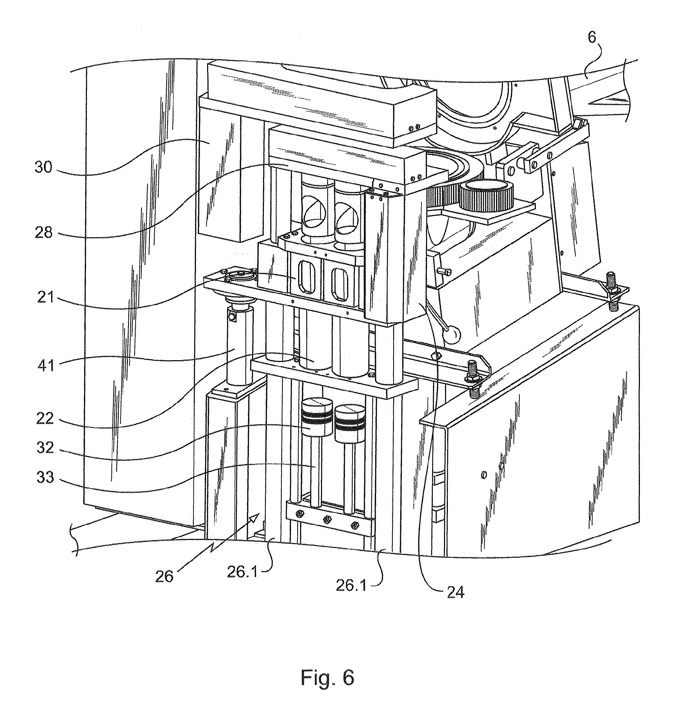

Les tournants des vannes à tournant 21 sont montés sur une platine formant coulisseau 28 qui porte la motorisation 24 et qui est monté pour coulisser sur une portion supérieure 29 des armatures verticales 26.1, cette portion supérieure formant glissière. Les tournants sont ainsi mobiles entre une position active dans laquelle le tournant est reçu dans un corps de la vanne 21 (voir les figures 1 à 3) et une position de nettoyage dans laquelle le tournant est dégagé du corps de vanne (voir les figures 4 à 6). La machine comprend des moyens motorisés de dégagement des tournants hors des corps de vanne. Ces moyens motorisés de dégagement des tournants hors des corps de vanne comprennent un moteur 30 ayant un arbre de sortie relié via des courroies à deux ensembles de transmission par vis / écrou 31 comportant chacun une vis verticale ayant une extrémité montée à pivotement sur la première entretoise 26.2 et un écrou engagée sur la vis et monté à pivotement sur le coulisseau 28. On comprend que la rotation du moteur entraîne en rotation les vis qui entraîneront en translation les écrous et donc le coulisseau 28.

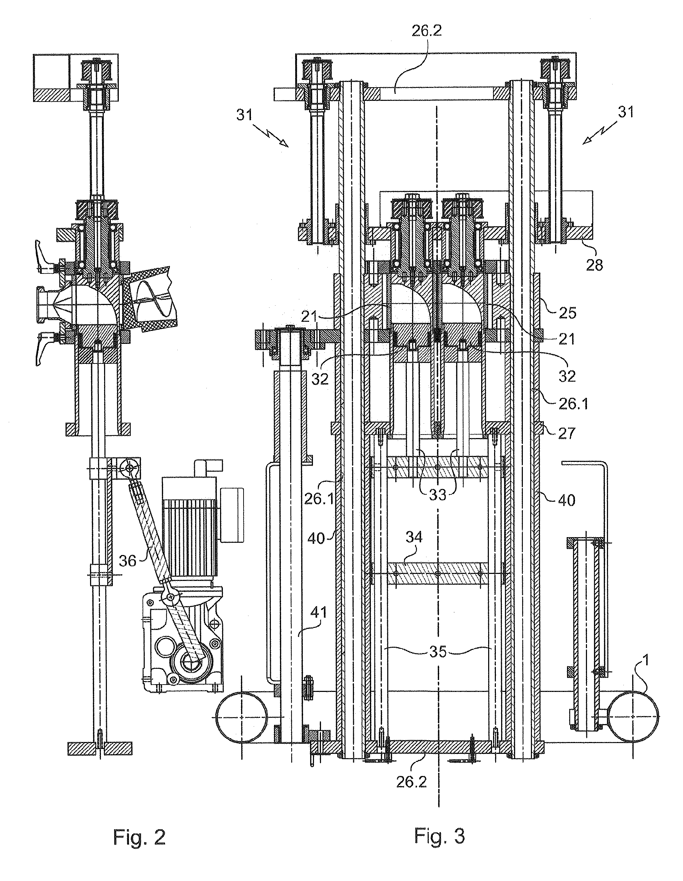

Les cylindres de dosage 22 sont solidaires d'un support commun 27 monté sur le châssis 26 sous le support commun 25. Les supports communs sont enfilés sur les armatures verticales 26.1 et sont maintenus en position verticalement par des entretoises 40 : le support commun 25 repose sur le support commun 27 qui repose sur les entretoises enfilées sur les armatures verticales 26.1. Chaque cylindre de dosage 22 possède une extrémité inférieure ouverte de sorte que le cylindre de dosage a la forme d'un tube sans fond. Chaque cylindre de dosage 22 reçoit un piston 32 mobile entre une position basse d'aspiration et une position haute de refoulement. Le piston 32 est relié par une tige 33 à une platine formant coulisseau 34 monté pour coulisser sur des glissières 35 fixées au châssis 26 pour s'étendre verticalement entre le support commun 27 et la deuxième entretoise 26.2. Le coulisseau 34 est relié par l'intermédiaire d'une rotule 39 et d'une bielle 36 à un maneton 37 solidaire d'un arbre de sortie d'un servomoteur 38 également fixé sous le support commun 27 (voir la figure 2). De préférence, la longueur de la bielle 36 est réglable pour permettre de régler la position du piston. On peut également prévoir que la distance entre le maneton 37 et l'arbre de sortie soit réglable, ce qui permettrait d'ajuster la course du piston à la quantité à doser. La machine comprend une unité de commande pilotant le moteur selon un mode de dosage dans lequel les pistons 32 ont une course de relativement faible amplitude dans le cylindre de dosage entre la position de refoulement et la position d'aspiration, et un mode de nettoyage dans lequel les pistons 32 ont une course de relativement forte amplitude entre une position dans le cylindre de dosage, la position basse d'aspiration, et une position hors du cylindre (visible sur les figures 2 et 3). Le moteur ainsi piloté forme avec l'ensemble bielle / maneton (ou manivelle) un moyen motorisé de dégagement des pistons 32 hors des cylindres de dosage 22.

Le fonctionnement de la machine doseuse conforme à l'invention est similaire dans son principe à celui des machines doseuses connues.

On notera toutefois que les servomoteurs 19 entraînant les vis de transfert 10 et le servomoteur 38 entraînant les pistons 32 peuvent être paramétrés indépendamment les uns des autres de manière à régler précisément d'une part la quantité de produit à doser et d'autre part la compression éventuelle du produit à doser dans le cylindre de dosage 22.

Pour nettoyer la machine de dosage, on commande les moyens motorisés de dégagement des pistons hors des cylindres de dosage et des tournants hors des corps de vanne. Une fois les pistons amenés hors des cylindres de dosage et les tournants amenés hors des corps de vanne et après démontage éventuel d'autres parties de la machine, la machine est aspergée au moyen d'un liquide de nettoyage puis d'un liquide de rinçage. Cette aspersion peut être réalisée par un opérateur manipulant un dispositif de projection desdits liquides ou par un réseau de buses fixées à demeure sur la machine et raccordées via une pompe sélectivement à un réservoir de liquide de nettoyage et à un réservoir de liquide de rinçage. On remarquera que l'aspersion des pistons, cylindres de dosage, tournants et corps de vanne est particulièrement aisée.

Bien entendu, l'invention n'est pas limitée au mode de réalisation décrit et on peut y apporter des variantes de réalisation sans sortir du cadre de l'invention tel que défini par les revendications.

En particulier, la liaison des vannes à tournant 21 avec le bâti 1 peut avoir une structure différente de celle décrite mais, comme celle-ci, permet de préférence de décoller les vannes à tournant 21 des conduits 12 et des cylindres de dosage 21 respectivement selon une direction sensiblement axiale des conduits et une direction sensiblement axiale des cylindres lors de leur mouvement de la position active à la position inactive.

En outre, l'angle entre le conduit 12 et le cylindre de dosage 22 peut être différent de 90°.

Le nombre de cylindres de dosage et de vannes à tournant peut être différent de deux.

## Revendications

1. Machine de dosage comportant un bâti (1) sur lequel sont montés une trémie (2), au moins un conduit (12) débouchant dans la trémie à proximité d'un fond de celle-ci et recevant une partie d'une vis de transfert (10) s'étendant au fond de la trémie, au moins un cylindre de dosage (22) qui reçoit à coulissement un piston d'aspiration et de refoulement (32) et qui est raccordé au conduit par une vanne à tournant (21) en contact avec une extrémité du conduit opposée à la trémie, et des moyens motorisés d'entraînement de la vis de transfert, du piston et du tournant qui sont agencés pour réaliser le dosage, **caractérisée en ce que** :
- le piston est monté sur le bâti pour coulisser entre une position de refoulement dans laquelle le piston est dans le cylindre de dosage au voisinage de la vanne et une position de nettoyage dans laquelle le piston est dégagé du cylindre de dosage,
- le tournant est monté sur le bâti pour coulisser entre une position active dans laquelle le tournant est reçu dans un corps de la vanne et une position de nettoyage dans laquelle le tournant est dégagé du corps de vanne,
- la machine comprend des moyens motorisés de dégagement du piston hors du cylindre de dosage et du tournant hors du corps de vanne.

2. Machine selon la revendication 1, dans laquelle les moyens motorisés d'entraînement du piston comprennent un moteur électrique ayant un arbre de sortie relié à une tige du piston par un ensemble bielle - manivelle, et une unité de commande pilotant le moteur selon un mode de dosage dans lequel le piston a une course de relativement faible amplitude dans le cylindre de dosage et un mode de nettoyage dans lequel le piston a une course de relativement forte amplitude entre une position dans le cylindre et une position hors du cylindre.

3. Machine selon la revendication 1, dans laquelle le piston, le cylindre de dosage, le corps de vanne et le tournant sont montés sur un châssis pour s'étendre coaxialement les uns par rapport aux autres, le piston et le tournant sont montés respectivement sur une première platine et une deuxième platine qui coulissent sur le châssis.

4. Machine selon la revendication 3, dans laquelle les moyens motorisés d'entraînement du tournant comprennent un moteur porté par la deuxième platine.

5. Machine selon la revendication 3, dans laquelle les moyens motorisés de dégagement du tournant comprennent moteur ayant un arbre de sortie relié à la deuxième platine par un ensemble de transmission par vis / écrou.

6. Machine selon la revendication 3, dans laquelle le châssis comporte des tubes recevant des câbles électriques.

7. Machine selon la revendication 3, dans laquelle le châssis comprend des armatures verticales sur lesquelles sont enfilés les platines, un support du cylindre et/ou un support du corps de vanne, le support de cylindre et le support de corps de vanne étant maintenus verticalement en position par des entretoises enfilées sur les armatures verticales.

8. Machine selon la revendication 3, dans laquelle le châssis est monté pour pivoter sur le bâti (1) entre une position active dans laquelle le corps de vanne à tournant (21) est en appui contre le conduit (12) et une position inactive dans laquelle le corps de vanne à tournant est écarté du conduit pour libérer l'accès à celui-ci.

9. Machine selon la revendication 1, dans laquelle le bâti comporte des tubes recevant des câbles électriques.

10. Machine selon la revendication 1, dans laquelle le bâti comporte des éléments d'ossature cylindriques.
